# EUROPEAN PATENT APPLICATION

(11) **EP 3 012 743 A1**
(43) Date of publication of application: **27.04.2016**
(21) Application number: 14813426.5
(22) Date of filing: 09.04.2014
(51) Int. Cl.: G06F 13/00, G06Q 30/02

(54) **INFORMATION PROCESSING DEVICE, INFORMATION PROCESSING METHOD AND PROGRAM**

(30) Priority: 18.06.2013 JP 2013127481
(71) Applicant: Sony Corporation, Tokyo 108-0075 (JP)
(72) Inventor: ONO, Hideyuki, Tokyo 108-0075 (JP); KURATA, Masatomo, Tokyo 108-0075 (JP); MATSUZAWA, Sota, Tokyo 108-0075 (JP); OGATA, Takashi, Tokyo 108-0075 (JP); KATSU, Masanori, Tokyo 108-0075 (JP)
(74) Representative: MFG Patentanwälte Meyer-Wildhagen Meggle-Freund Gerhard PartG mbB
(86) International application number: PCT/JP2014/060293
(87) International publication number: WO 2014/203597

(57) **Abstract**

[Object] To effectively award incentives to the users to allow users to share their behavior information through a user object displayed in a virtual space.

[Solution] There is provided an information processing device including a processor. The processor realizes a behavior information acquisition function of acquiring first behavior information indicating a behavior of a first user, a display control function of causing a display unit to display a first user object which is generated based on the first behavior information and indicates the first user, and a reward registration function of registering a reward object in association with a second user who is different from the first user based on the first behavior information for a first time for which the second user observes the first user object via the display unit.

## Description

### Technical Field

The present disclosure relates to an information processing device, an information processing method, and a program.

### Background Art

As social media are becoming widespread, it is becoming normal for users to share behaviors with one another through a network. For example, Patent Literature 1 discloses a technology of reflecting actual behaviors of respective users such as walking, running, sitting, standing, and talking on a phone through poses of objects that indicate the users in a virtual space displayed on a screen, and also expressing degrees of intimacy between the users, actual positions of the respective users, traits of behaviors, or preferences using displayed positions of the objects.

### Citation List

### Patent Literature

Patent Literature 1: JP 2010-134802A

### Summary of Invention

### Technical Problem

On the other hand, as an incentive for users to access a virtual space, a mechanism of giving a reward when a user performs a specific behavior in the virtual space is also known. For example, many online or offline games have a system in which items and the like of the games are awarded to users when the users earn a predetermined score due to their behaviors performed in virtual spaces of the games, execute steps of a specific attack, and the like. However, such a mechanism of rewards has generally not yet been introduced in the technology disclosed in Patent Literature 1.

Therefore, the present disclosure proposes a novel and advanced information processing device, information processing method, and program which enable incentives to be effectively awarded to the users when they share their behavior information through a user object displayed in a virtual space.

### Solution to Problem

According to the present disclosure, there is provided an information processing device including: a processor. The processor realizes a behavior information acquisition function of acquiring first behavior information indicating a behavior of a first user, a display control function of causing a display unit to display a first user object which is generated based on the first behavior information and indicates the first user, and a reward registration function of registering a reward object in association with a second user who is different from the first user based on the first behavior information for a first time for which the second user observes the first user object via the display unit.

According to the present disclosure, there is provided an information processing method including: acquiring, by a processor, first behavior information indicating a behavior of a first user; causing, by the processor, a display unit to display a first user object which is generated based on the first behavior information and indicates the first user; and registering, by the processor, a reward object in association with a second user who is different from the first user based on the first behavior information for a first time for which the second user observes the first user object via the display unit.

According to the present disclosure, there is provided a program for causing a computer to realize: a behavior information acquisition function of acquiring first behavior information indicating a behavior of a first user; a display control function of causing a display unit to display a first user object which is generated based on the first behavior information and indicates the first user; and a reward registration function of registering a reward object in association with a second user who is different from the first user based on the first behavior information for a first time for which the second user observes the first user object via the display unit.

### Advantageous Effects of Invention

According to the present disclosure described above, incentives can be effectively awarded to the users to allow users to share their behavior information through a user object displayed in a virtual space.

### Brief Description of Drawings

[FIG. 1] FIG. 1 is a diagram illustrating a schematic configuration of a system according to an embodiment of the present disclosure.
[FIG. 2] FIG. 2 is a block diagram showing a schematic functional configuration of the system according to an embodiment of the present disclosure.
[FIG. 3] FIG. 3 is a diagram illustrating an example of a list display screen according to an embodiment of the present disclosure.
[FIG. 4] FIG. 4 is a diagram illustrating an example of a virtual space display screen according to an embodiment of the present disclosure.
[FIG. 5] FIG. 5 is a diagram for describing a relation between the list display screen and the virtual space display screen according to an embodiment of the present disclosure.
[FIG. 6] FIG. 6 is a diagram illustrating an example of a posting history screen according to an embodiment of the present disclosure.
[FIG. 7] FIG. 7 is a diagram illustrating an example of a behavior summarizing screen according to an embodiment of the present disclosure.
[FIG. 8] FIG. 8 is a diagram illustrating an example of a reward gain notification screen according to an embodiment of the present disclosure.
[FIG. 9] FIG. 9 is a diagram illustrating an example of a reward list screen according to an embodiment of the present disclosure.
[FIG. 10] FIG. 10 is a diagram illustrating an example of a case in which the behavior summarizing screen includes display of rewards according to an embodiment of the present disclosure.
[FIG. 11] FIG. 11 is a diagram illustrating an example of a gained reward details screen according to an embodiment of the present disclosure.
[FIG. 12] FIG. 12 is a diagram illustrating an example of a non-gained reward details screen according to an embodiment of the present disclosure.
[FIG. 13] FIG. 13 is a diagram illustrating a specific example of a reward image according to an embodiment of the present disclosure.
[FIG. 14] FIG. 14 is a block diagram for describing a hardware configuration of an information processing device.

### Description of Embodiments

Hereinafter, (a) preferred embodiment(s) of the present disclosure will be described in detail with reference to the appended drawings. Note that, in this specification and the drawings, elements that have substantially the same function and structure are denoted with the same reference signs, and repeated explanation is omitted.

Note that description will be provided in the following order.
1. System configuration
2. Functional configuration
3. Example of screen display
4. Example of a reward
5. Hardware configuration
6. Supplement

### (1. System configuration)

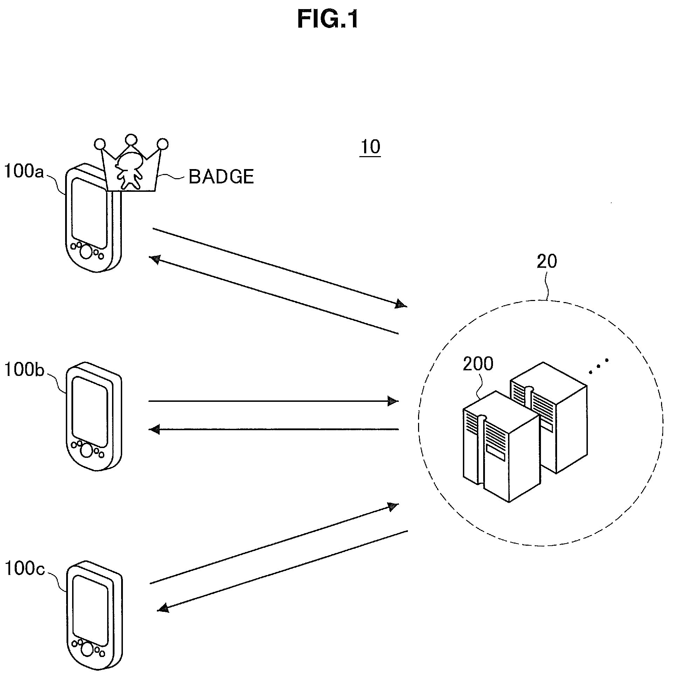

FIG. 1 is a diagram illustrating a schematic configuration of a system according to an embodiment of the present disclosure. Referring to FIG. 1, the system 10 according to the present embodiment includes client devices 100 and server devices 200. A server 20 is constituted by a single server device 200 or a plurality of cooperating server devices 200, and the server 20 communicates with the client devices 100 via a network and thereby provides services to the client devices 100. The client devices 100 and the server devices 200 all can be realized with a hardware configuration of an information processing device to be described below.

In the present embodiment, the client devices 100 include a plurality of client devices 100a, 100b, and 100c. These client devices 100 all are possessed and/or carried by different users. As will be described below, in the present embodiment, an object generated based on a behavior of a user recognized using, for example, the client device 100b (which is assumed to be a behavior of a user B) can be displayed in a virtual space in other client devices 100a, 100c, and/or the client device 100b. This object can be an object which displays the user B. Likewise, objects generated based on behaviors of respective users recognized using the client devices 100a and 100c (which are assumed to be behaviors of a user A and a user C) can be displayed in respective virtual spaces of the client devices 100a to 100c.

In this manner, in the present embodiment, by disposing the objects generated based on information indicating the behaviors of the respective users in the client devices 100, the behaviors of the users can be shared in the virtual spaces, regardless of where the users actually are.

Further, in the present embodiment, a reward object (badge) is awarded based on an operation performed by a user to share a behavior using his or her client device 100, a behavior of the user recognized by the client device 100, a behavior of another user displayed as an object in the client device 100, or the like. More specifically, a reward object (badge) is registered in association with each user in a service provided by the system 10, and an image which corresponds to the reward object (badge) can be displayed in the client device 100 as a possession of the user.

In the illustrated example, a reward object (badge) is registered for the user (user A) of the client device 100a. The user A can also browse images which correspond to the reward object (badge) in the client device 100a, and when the users (user B and user C) of the other client devices 100b and 100c refer to information regarding the user A, an image which corresponds to the reward object (badge) registered in association with the user A can be displayed as a possession of the user A.

### (2. Functional configuration)

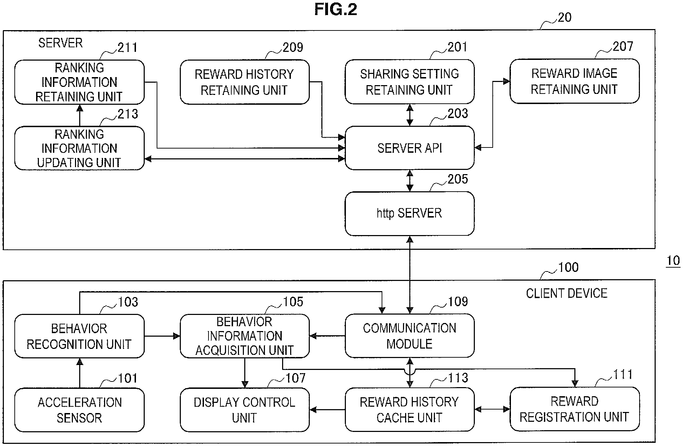

FIG. 2 is a block diagram showing a schematic functional configuration of the system according to an embodiment of the present disclosure. Note that, although functional configurations of each client device 100 and server 20 will be described below with reference to FIG. 2, a function described as being realized by a processor below may be realized by a processor of any of the client device 100 or the server device 200.

### (Client device)

Each client device 100 can include an acceleration sensor 101, a behavior recognition unit 103, a behavior information acquisition unit 105, a display control unit 107, a communication module 109, a reward registration unit 111, and a reward history cache unit 113. Note that the behavior recognition unit 103, the behavior information acquisition unit 105, the display control unit 107, and the reward registration unit 111 can be realized by a processor such as a CPU.

The acceleration sensor 101 detects acceleration applied to the client device 100. With acceleration, for example, a state of a motion or the like of a user who is carrying the client device 100 can be recognized. In addition to the acceleration sensor 101, the client device 100 may have various sensors, for example, a gyro sensor, a geomagnetic sensor, a light sensor, a sound sensor, a pneumatic sensor, and the like. Using these sensors, for example, postures, directions, peripheral environments, and the like of the client device 100 can be detected. In addition, the client device 100 may have a positioning means such as a GPS sensor, or a Wi-Fi communication unit for acquiring position information of users.

The behavior recognition unit 103 recognizes behaviors of the user of the client device 100 based on results of detection of a sensor such as the acceleration sensor 101. For a technology for behavior recognition based on a sensor detection result, for example, technologies disclosed in JP 2010-198595A, JP 2011-81431A, and the like can be used, and thus detailed description thereof will be omitted. Behaviors of a user, for example, stopping, walking, running, riding a train, and riding a car, can be recognized through processes of the behavior recognition unit 103. In addition, the behavior recognition unit 103 may recognize a sophisticated behavior such as whether a user is working, staying at home, or shopping based on a detection result of the acceleration sensor 101 or the like and position information of the user.

The behavior information acquisition unit 105 acquires behavior information indicating a behavior of the user recognized by the behavior recognition unit 103. In addition, the behavior information acquisition unit 105 acquires behavior information indicating a behavior of another user recognized by another client device 100 via the communication module 109 to be described below. That is, the behavior information acquisition unit 105 also acquires behavior information of another user, in addition to behavior information of the user of the client device 100. Here, the behavior information of the other user can be provided to the client device 100 according to a sharing setting retained in a sharing setting retaining unit 201 of the server 20 to be described below.

Note that, in another embodiment, the client device 100 may not have the acceleration sensor 101 and the behavior recognition unit 103, and the behavior information acquisition unit 105 may only acquire behavior information indicating a behavior of another user.

The display control unit 107 generates a user object which indicates the user of the client device 100 or the user of another client device 100 (another user) based on behavior information acquired by the behavior information acquisition unit 105, and causes the user object to be displayed on a display of the client device 100. As in a display example to be described below, the display control unit 107 may, for example, cause a list which includes user objects to be displayed, or may cause a virtual space in which user objects are disposed to be displayed. In addition, the display control unit 107 may, for example, cause both a user object indicating a user and a user object indicating another user to be displayed, or may only cause a user object indicating the other user to be displayed. The number of displayed user objects indicating other users may be only one or two or more.

The communication module 109 is realized by various communication circuits which perform wired or wireless network communication according to control of a processor. The communication module 109 transmits, for example, behavior information indicating a behavior of a user recognized by the behavior recognition unit 103 to the server 20. The behavior information transmitted to the server 20 can be provided to another client device 100 according to a sharing setting retained in the sharing setting retaining unit 201. Here, the behavior information transmitted to the server 20 can be at least temporarily retained in the server 20. The retained behavior information can be provided to another client device 100 according to the sharing setting. In addition, ranking information to be described below can be generated based on the retained behavior information. In addition, the communication module 109 receives behavior information of another user provided via the server 20, and provides the behavior information to the behavior information acquisition unit 105.

The reward registration unit 111 registers a reward object of the user of the client device 100 based on the behavior information of the user displayed as a user object by the display control unit 107. The reward object is an object indicating that a reward has been awarded to the user. Under the condition that the reward object has been registered, an image of the reward retained in a reward image retaining unit 207 of the server 20 to be described below can be displayed in the client device 100. When registering a reward object, the reward registration unit 111 determines whether or not a predetermined condition is satisfied based on an operation input given to the client device 100, behavior information of the user displayed as a user object by the display control unit 107, or the like. Note that a specific example of the condition will be described below.

The reward history cache unit 113 can be realized by a memory or a storage of the client device 100. The reward history cache unit 113 retains a cache of a history of registration of a reward object for the user performed by the reward registration unit 111. Note that master data of the history is retained in a reward history retaining unit 209 of the server 20 to be described below. For example, when the server 20 starts a service toward the client device 100, a history retained in the reward history retaining unit 209 with respect to the user of the client device 100 can be copied to the reward history cache unit 113. In addition, when a reward object is newly registered by the reward registration unit 111, the history retained in the reward history retaining unit 209 can be updated through the communication module 109 and the cache retained in the reward history cache unit 113 can also be updated.

Here, the reward history cache unit 113 can also be used when, for example, the reward registration unit 111 determines whether to register a reward object or not. For example, when a predetermined condition is determined to be satisfied based on an operation input given to the client device 100, behavior information of the user displayed as a user object by the display control unit 107 or the like, the reward registration unit 111 may determine whether or not a reward object that can be registered under the condition has already been registered for the user of the client device 100 with reference to the reward history cache unit 113.

The client device 100 that can include the functional configurations described above can be any of various terminal devices carried by a user, for example, a smartphone, a tablet terminal, a media player, a game device, or the like. In addition, when the client device 100 does not have the acceleration sensor 101 and the behavior recognition unit 103 and the behavior information acquisition unit 105 only acquires behavior information indicating a behavior of another user, the client device 100 may be a stationary terminal device such as any of various personal computers (PCs), or a television.

### (Server)

Further, referring to FIG. 2, the server 20 can include the sharing setting retaining unit 201, a server application programming interface (API) 203, a hypertext transfer protocol (http) server 205, the reward image retaining unit 207, the reward history retaining unit 209, a ranking information retaining unit 211, and a ranking information updating unit 213. Note that the server API 203 and the ranking information updating unit 213 can be realized by a processor such as a CPU. In addition, the reward image retaining unit 207, the reward history retaining unit 209, and the ranking information retaining unit 211 can be realized by a memory or a storage of the server device 200.

The sharing setting retaining unit 201 retains a sharing setting for the users of the plurality of client devices 100 to share behaviors with one another. The sharing setting can be generated when, for example, the user of a certain client device 100 registers the user of another client device 100 as a sharing partner of behavior information. For example, when a sharing setting for the user (user A) of the client device 100a and the user (user B) of the client device 100b to share behaviors with each other is generated, the user A can observe a user object generated based on behavior information of the user B through the display of the client device 100a.

Here, the sharing setting may be, for example, bidirectional such that the user B can also observe a user object generated based on behavior information of the user A through a display of the client device 100b, or may be unidirectional such that the user B is not allowed to observe the user object of the user A. In addition, the sharing setting may be generated through, for example, an operation performed within a service provided by the system 10 as described above, or may be imported from another service. More specifically, the sharing setting may be automatically generated based on, for example, a friend setting, a group setting, or the like of social media.

The server API 203 is an interface provided for the client device 100 to access each function of the server 20 beginning from the sharing setting retaining unit 201 via the http server 205. The http server 205 communicates with the client device 100 in accordance with http. For example, one of the server devices 200 constituting the server 20 may function as the exclusive http server 205, or the function of the http server 205 may be provided as one function of the server device 200 which also realizes other functions. Communication based on http may be encrypted. Note that, since detailed configurations of the server API 203 and the http server 205 are well known, description thereof will be omitted.

The reward image retaining unit 207 retains images which correspond to reward objects (which may be referred to hereinafter as reward images) registered by the reward registration unit 111 of the client device 100. In the present embodiment, types of reward object to be provided in a service that the system 10 provides are already decided, and the reward image retaining unit 207 retains images corresponding to each of the reward objects. When there is a request from the client device 100, the reward image retaining unit 207 provides data of a reward image to the client device 100 via the server API 203 and the http server 205. At this time, a history retained in the reward history retaining unit 209 to be described below can be referred to and a reward image that can be provided to each user can be selected.

The reward history retaining unit 209 retains histories of registration of reward objects of users by the reward registration unit 111, like the reward history cache unit 113 of the client device 100. As described above, data retained in the reward history retaining unit 209 is master data of the data retained in the reward history cache unit 113. Thus, when there is no data of histories in the reward history cache unit 113 (for example, when a new sharing setting is added to the sharing setting retaining unit 201, or the like), for example, the data retained in the reward history retaining unit 209 is copied to the reward history cache unit 113. In addition, when data of the reward history cache unit 113 is updated, such as when the reward registration unit 111 registers a new reward object, data for also executing the same updating in the reward history retaining unit 209 is uploaded from the client device 100 to the server 20.

The ranking information retaining unit 211 retains ranking information based on behaviors of respective users. The ranking information updating unit 213 updates ranking information retained in the ranking information retaining unit 211 based on behavior information of the respective users which has been provided from the client device 100 via the http server 205 and the server API 203, and temporarily retained in the server device 200. The ranking information updating unit 213 may be automatically activated, for example, every predetermined period of time (for example, every 1 hour), and perform updating of ranking information. The ranking information is information of rankings extracted by statistically processing behavior information of the users. Rankings of all users who are using the service provided by the system 10 may be extracted, regardless of, for example, a sharing setting retained in the sharing setting retaining unit 201. Alternatively, rankings of users who are sharing their behaviors or of a group set by a user may be extracted based on a sharing setting retained in the sharing setting retaining unit 201. When there is a request from the client device 100, the ranking information retained in the ranking information retaining unit 211 can be provided to the client device 100 via the server API 203 and the http server 205.

Here, the ranking information retained in the ranking information retaining unit 211 and updated by the ranking information updating unit 213 can also be a condition for registering a reward object for the user of the client device 100. Thus, the ranking information updating unit 213 may, for example, provide an updating result of the ranking information to the client device 100 via the server API 203 and the http server 205, and the reward registration unit 111 of the client device 100 may register a reward object of each user based on the updating result of the ranking information. For example, the ranking information updating unit 213 can provide the updating result of the ranking information to the client device 100 of a user who is highly ranked in the updated rankings or a user positioned at a predetermined ranking (100^{th}, 300^{th}, or the like). Note that a specific example of rankings will be described below.

### (3. Example of screen display)

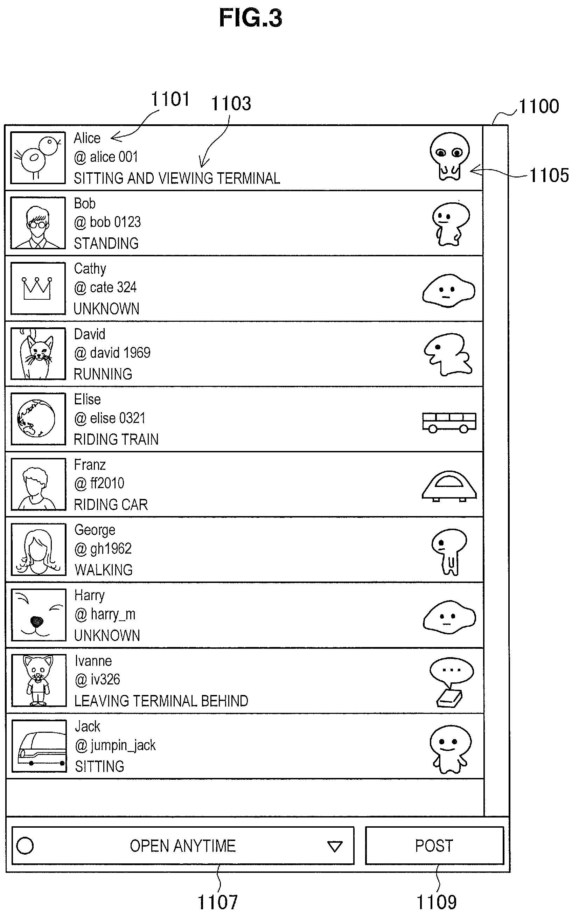

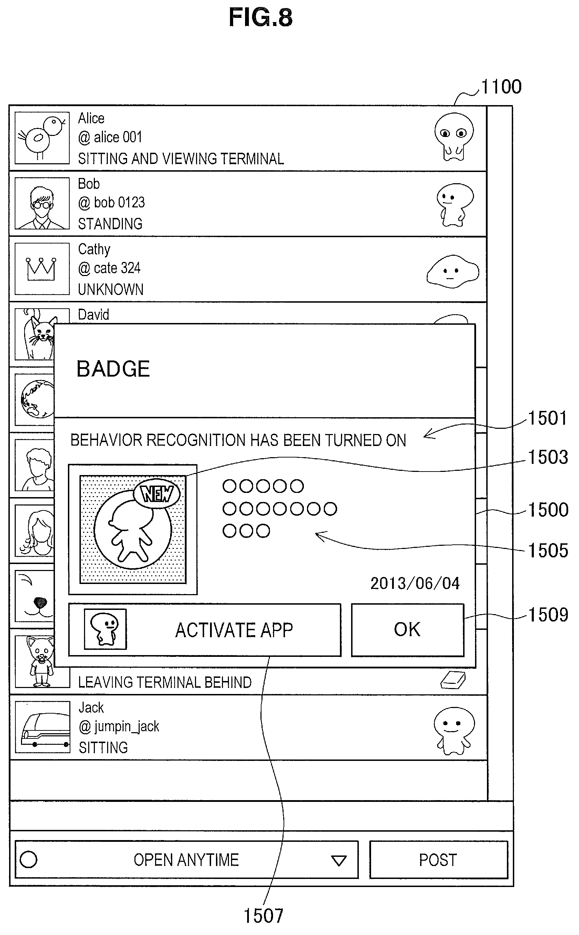

Next, an example of a screen display according to an embodiment of the present disclosure will be described. For easier understanding, an example of a screen display in which no reward object is provided will be first described with reference to FIGS. 3 to 7, and then an example of a screen display in which reward objects are provided will be described with reference to FIGS. 8 to 13.

### (3-1. List display screen)

FIG. 3 is a diagram illustrating an example of a list display screen according to an embodiment of the present disclosure. Referring to FIG. 3, the list display screen 1100 displayed on the display of the client device 100 includes a list of items which include user information 1101, behavior status 1103, and a user object 1105, a behavior information use setting button 1107, and a posting button 1109.

The user information 1101 includes, for example, a thumbnail image, a user name, and a user ID as illustrated. Any of these may be displayed as the user information 1101, or other information in addition to them may be displayed as the user information 1101. The user information 1101 can be displayed based on account information of a user registered in a database of the server 20.

The behavior status 1103 expresses a behavior of each user recognized by the behavior recognition unit 103 of the client device 100 described above as text. As indicated by the behavior status 1103 in the illustrated example, for example, motions of a user such as standing, running, walking, or sitting, riding a vehicle such as riding a train or a car, movements relating to a terminal such as viewing a terminal while sitting, and leaving a terminal behind, and the like can be recognized as behaviors of a user in the present embodiment. Note that recognizable behaviors in embodiments of the present disclosure are not limited thereto, and a variety of behaviors introduced in, for example, JP 2010-198595A, JP 2011-81431A, and the like can be recognized.

The user object 1105 expresses a behavior of each user recognized by the behavior recognition unit 103 using the pose (shape) or motion of the behavior. That is, the user object 1105 is generated based on behavior information which indicates a behavior of a user, and displayed on a display unit to express the user. As shown in the illustrated example, the user object 1105 has, for example, a human shape, and may express a behavior of a user by assuming a pose corresponding to the behavior of the user (for example, standing, running, or the like). Alternatively, when the user rides a vehicle, the user object 1105 may be displayed in the shape of the vehicle. In addition, when the user leaves his or her terminal behind or a behavior of the user is not recognized (obscure), the user object 1105 may have the shape of an unidentified object or the shape of a left terminal device, rather than the shape of a person or a vehicle.

The behavior information use setting button 1107 is a button used when the user of the client device 100 sets whether or not to turn behavior recognition by the behavior recognition unit 103 on or off and to have behavior information acquired through recognition open. The state of the illustrated example is set to "open anytime," but in addition to that, there can be options such as "off" (behavior recognition is not used), "not open" (behavior recognition is used but information is not open to anyone including a user for whom the sharing setting is set), and the like. In addition, when behavior information is open, the behavior information can be set open by limiting a time zone or a date, for example, "every day from 7:00 to 21:00," "24 hours, Monday through Friday," "24 hours, Saturday and Sunday," and the like.

The posting button 1109 is a button used when the user of the client device 100 activates the function of posting a message. The message posted by the user is displayed on a posting history screen to be described below.

From the list display screen 1100 described above, the user of the client device 100 can view the behavior status 1103 and the user objects 1105 of many users at a glance. A personal information screen of each user may be displayed on the list display screen 1100 by, for example, selecting the behavior status 1103 or the user objects 1105, or a line of the list in which they are included.

### (3-2. Virtual space display screen)

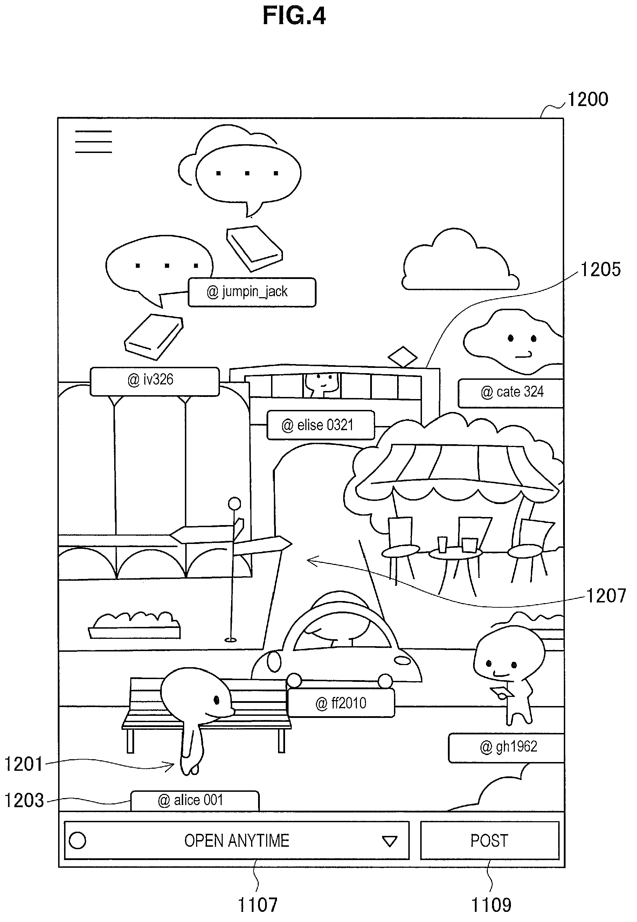

FIG. 4 is a diagram illustrating an example of a virtual space display screen according to an embodiment of the present disclosure. Referring to FIG. 4, the virtual space display screen 1200 displayed on the display of the client device 100 includes a user object 1201, user information 1203, a vehicle object 1205, and a virtual space 1207. Furthermore, the behavior information use setting button 1107 and the posting button 1109 are also displayed on the virtual space display screen 1200.

Note that the virtual space display screen 1200 shown in FIG. 4 is displayed based on behavior information of each user at a different point in time from the list display screen 1100 shown in FIG. 3. Thus, a behavior state of each user in the example of FIG. 3 does not necessarily coincide with a behavior state of each user of FIG. 4.

The user object 1201 is the same object as displayed on the list display screen 1100. That is, the user object 1201 is generated based on behavior information indicating a behavior of each user and displayed on the display unit to represent the user. Behaviors of respective users are displayed on the virtual space display screen 1200 mainly using user objects 1201. Here, each user object 1201 can be disposed at a position in the virtual space 1207 suitable for its pose (shape) or motion. For example, a sitting user object 1201 is disposed near a bench, and a standing user object 1201 is disposed on a roadside. In addition, a user object 1201 that was described above as having the shape of any of various vehicles on the list display screen 1100 may be shaped like a human and disposed inside a vehicle object to be described below. In addition, a user object 1201 having the shape of an unidentified object or the shape of a left terminal may be displayed floating in the sky.

The user information 1203 includes, for example, a user ID as illustrated. In addition to or instead of that, a user name, a thumbnail image, or the like may be displayed as the user information; however, on the virtual space display screen 1200 of the present embodiment, only user IDs are displayed as the user information 1203 in order to avoid obstructing display of the virtual space 1207 or other user objects 1201.

The vehicle object 1205 is disposed in the virtual space 1207, and accommodates the user object 1201 of a user who is represented as riding a vehicle based on behavior information. In the illustrated example, the vehicle object 1205 of a train and the vehicle object 1205 of a car are disposed in the virtual space 1207. In addition, for example, vehicle objects 1205 of a bus, a bicycle, an airplane, an elevator, and the like may be displayed. The vehicle objects 1205 can be disposed at positions according to respective vehicles in the virtual space 1207. For example, the vehicle objects 1205 of a bus, a car, or a bicycle can be disposed on roads, the vehicle object 1205 of a train can be disposed on a railroad, and the vehicle object 1205 of an elevator can be disposed inside a building.

The virtual space 1207 is a space in which the user objects 1201 and the vehicle objects 1205 are disposed. The virtual space 1207 may be constituted based on, for example, a theme selected by the user of the client device 100 from several themes prepared in advance. In addition, the virtual space 1207 may include elements for disposing, for example, user objects 1201 having various poses (shapes) and motions and various vehicle objects 1205. For example, in the illustrated example, the virtual space 1207 includes elements including a bench on which a sitting user object 1201 is disposed, a road on which a vehicle object 1205 of a car is disposed.

As illustrated, the same behavior information use setting button 1107 and posting button 1109 as on the list display screen 1100 can also be displayed on the virtual space display screen 1200. Furthermore, although not illustrated, the virtual space display screen 1200 may display another posting button used when a user acquires a snapshot of the virtual space 1207 including the user objects 1201, user information 1203, and vehicle objects 1205 and posts a message along with the snapshot as an attached image.

From the virtual space display screen 1200 described above, the user of the client device 100 can dispose user objects 1201 of users in the same virtual space 1207 and observe them, and thereby obtain a sense of intimacy with other users, for example, feeling as if they are living in the same village. A personal information screen of each user may be displayed on the virtual space display screen 1200 by, for example, selecting the user object 1201 or the user information 1203.

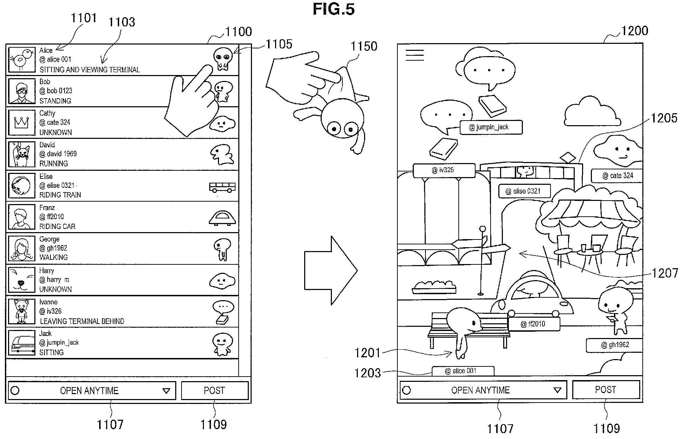

FIG. 5 is a diagram for describing a relation between the list display screen and the virtual space display screen according to an embodiment of the present disclosure. As illustrated in FIG. 5, by moving the user object 1105 displayed on the list display screen 1100 to the virtual space display screen 1200 using a so-called drag-and-drop operation in the present embodiment, a user can add the user object 1201 of the user to the virtual space display screen 1200. Note that a user object 1150 that is being dragged is displayed in the drawing. While being dragged from the list display screen 1100 to the virtual space display screen 1200, the user object 1150 may be displayed in a different pose (shape) or motion from that of the user object 1105 or the user object 1201.

As shown in the illustrated example, only some users among the users whose behavior statuses 1103 or user objects 1105 are displayed in the list display 1100 are also displayed as user objects 1201 on the virtual space display screen 1200 in the present embodiment. For example, an upper limit may be set on the number of user objects 1201 that can be added to the virtual space display screen 1200 to prevent the user objects 1201 from obstructing each other on the virtual space display screen 1200 or the virtual space 1207 from being difficult to view. Note that, in another embodiment, all users whose behavior statuses 1103 or user objects 1105 are displayed in the list display 1100 can also be displayed as user objects 1201 on the virtual space display screen 1200.

### (3-2. Personal information screen)

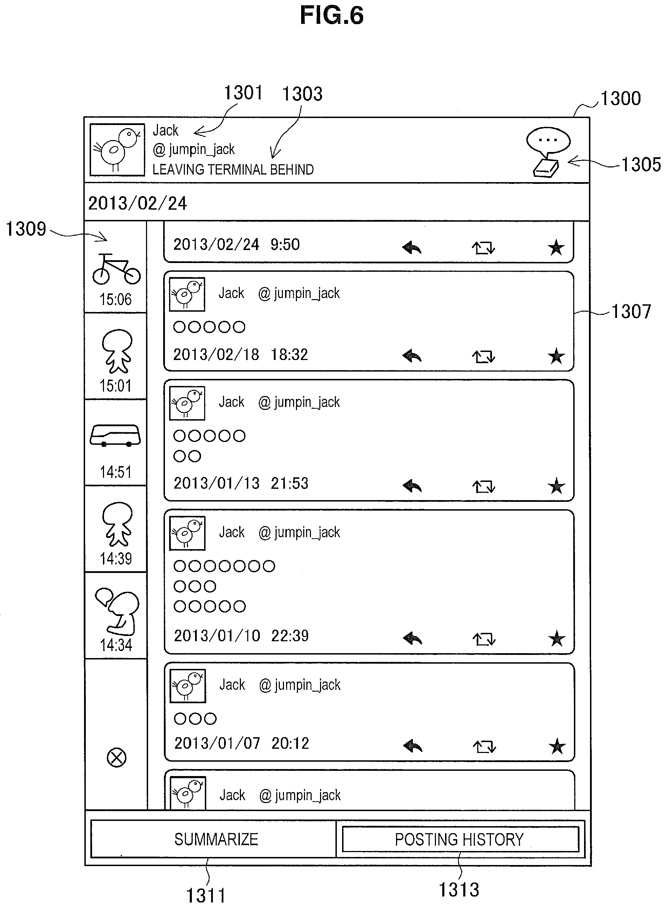

FIG. 6 is a diagram illustrating an example of the posting history screen according to an embodiment of the present disclosure. Referring to FIG. 6, the posting history screen 1300 displayed on the display of the client device 100 includes user information 1301, a behavior status 1303, a user object 1305, a posted message 1307, a behavior icon 1309, a summarize button 1311, and a posting history button 1313.

The posting history screen 1300 is one of personal information screens in the present embodiment. The posting history screen 1300 can be displayed by selecting, for example, the behavior status 1103 or the user object 1105, or a line of the list display screen 1100 including them. In addition, the posting history screen 1300 may be displayed by selecting the user object 1201 or the user information 1203 on the virtual space display screen 1200.

The user information 1301 can be the same as the user information 1101 of the list display screen 1100 described above with reference to FIG. 3. However, since the posting history screen 1300 is a personal information screen of each user, the user information 1301 with respect to one user is displayed.

The behavior status 1303 and the user object 1305 can also be the same as the behavior status 1103 and the user object 1105 of the list display screen 1100. However, since the posting history screen 1300 is a personal information screen of each user, the behavior status 1303 and the user object 1305 with respect to one user are displayed.

The posted message 1307 is a message posted in the past by a user who is a display target of the posting history screen 1300. Posted messages 1307 are, for example, arranged chronologically, and displayed in order as the user scrolls the display down.

The behavior icon 1309 is an icon indicating the behavior of the user recognized at the closest time to the time at which the posted message 1307 was posted. The behavior icon 1309 may be the same as the user object 1105 that is being (likely to be) displayed when the posted message 1307 is posted, or may be an icon indicating a behavior of the user confirmed through further processing thereafter. In this case, the behavior icon 1309 can indicate a different behavior from the user object 1105 shown when the posted message 1307 is posted.

The summarize button 1311 is a button for switching a display to a behavior summarizing screen 1400 to be described later. Although the posting history screen 1300 and the behavior summarizing screen 1400 are displayed as personal information screens of users in the present embodiment, switching between the screens can be performed using the summarize button 1311 and the posting history button 1313. Thus, the posting history screen 1300 is displayed in a state in which the posting history button 1313 is selected.

The user of the client device 100 can refer to a behavior of each user along with a message posted by the user on the posting history screen 1300 described above.

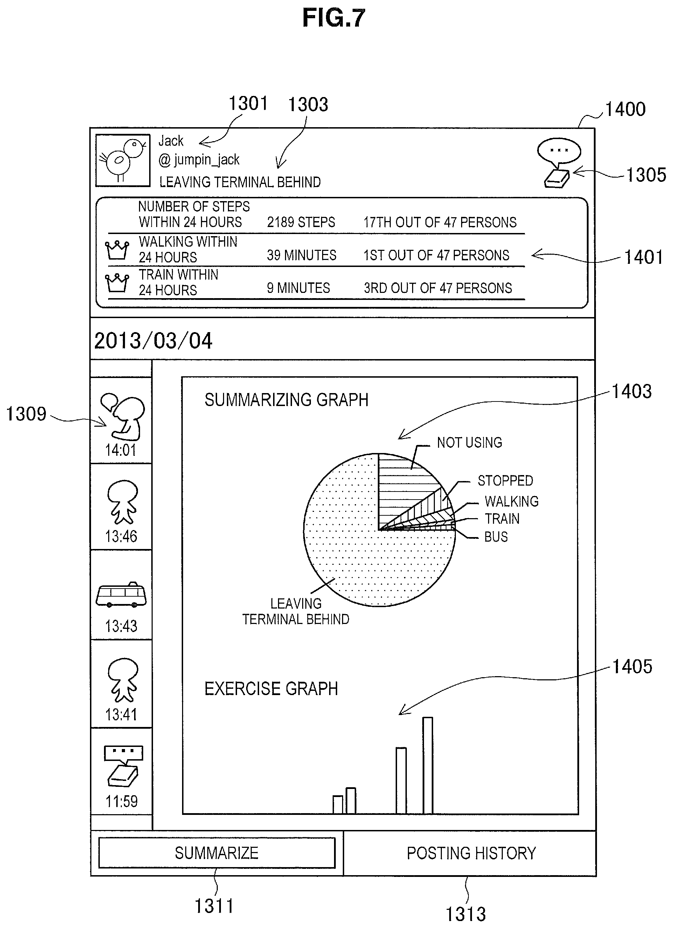

FIG. 7 is a diagram illustrating an example of a behavior summarizing screen according to an embodiment of the present disclosure. Referring to FIG. 7, the behavior summarizing screen 1400 displayed on the display of the client device 100 displays a ranking 1401, a summarizing graph 1403, and an exercise graph 1405, in addition to the same elements as those on the posting history screen 1300 including the user information 1301, the user status 1303, the user object 1305, the user icon 1309, the summarize button 1311, and the posting history button 1313.

The behavior summarizing screen 1400 is a different personal information screen from the posting history screen 1300 in the present embodiment. The behavior summarizing screen 1400 can also be displayed by selecting, for example, the behavior status 1103 or the user object 1105, or a line of the list which includes them on the list display screen 1100, like the posting history screen 1300. In addition, the behavior summarizing screen 1400 may be displayed by selecting the user object 1201 or the user information 1203 on the virtual space display screen 1200. As described above, display can be switched between the posting history screen 1300 and the behavior summarizing screen 1400 using the summarize button 1311 and the posting history button 1313.

The ranking 1401 is displayed based on, for example, ranking information retained in the ranking information retaining unit 211 of the server 20. A ranking can include an item extracted by statistically processing behavior information of the user, for example, "number of steps within 24 hours," "walking time within 24 hours," and "time spent aboard a train within 24 hours" in the illustrated example. An updating interval of the ranking 1401 can be freely set. The updating interval may not necessarily be related to the sample interval (24 hours in this example) of the ranking item. For example, the ranking 1401 may be updated at an interval of one day (24 hours) or may be updated at an interval of 1 hour in this example. When the ranking 1401 is updated at 10:00 a.m., for example, "24 hours" means the time from 10:00 a.m. of the previous day to 10:00 a.m. of that day.

The summarizing graph 1403 is a graph summarizing behaviors of one day of the user. In the illustrated example, kinds of behaviors of the user recognized on one certain day (March 4^{th}, 2013 in the illustrated example) are displayed in a graph. The exercise graph 1405 is a graph indicating a state of exercise presumed from behavior information of one day of the user. Although the middle part of the drawn graph is cut off, times, for example, in which the user walked and ran are made into a graph in units of hours and displayed as the exercise graph 1405. In this manner, information expressing behaviors of the user by summarizing them at a predetermined time interval is not limited to the summarizing graph 1403 and the exercise graph 1405 of the illustrated example, and may be a graph of any other format. In addition, a time interval for summarizing behaviors of the user is not limited to one day, and may be a longer time such as one week, one month, or the like, or may be a shorter time such as 12 hours, 6 hours, or the like.

The behavior icon 1309 is an icon which indicates a behavior of the user like that displayed on the posting history screen 1300. On the behavior summarizing screen 1400, however, an icon which indicates a behavior of the user recognized in time (March 4^{th}, 2013 in the illustrated example) of information that expresses summarized behaviors of the user such as the summarizing graph 1403 and the exercise graph 1405 can be displayed as the behavior icon 1309.

The user of the client device 100 can refer to the information that expresses summarized behaviors of each user as of a predetermined time on the behavior summarizing screen 1400 described above.

### (3-3. Reward gain notification screen)

FIG. 8 is a diagram illustrating an example of a reward gain notification screen according to an embodiment of the present disclosure. Referring to FIG. 8, the reward gain notification screen 1500 displayed on the display of the client device 100 includes a reward title 1501, a reward image 1503, a reward description 1505, an application activation button 1507, and an OK button 1509.

When a reward object of the user of the client device 100 has been registered, the reward gain notification screen 1500 is displayed on the display of the client device 100. For example, the reward gain notification screen may be displayed as a popup window as in the illustrated example. Although the background of the screen is the list display screen 1100 in the drawing, it may be any other screen. In addition, in the client device 100, since processing of the behavior recognition unit 103 or the reward registration unit 111 can also be executed on the background, the reward gain notification screen may be displayed using an application screen or a desktop screen that is not related to the present embodiment as the background.

The reward title 1501 displays the title of a newly registered reward object of a user. The reward title 1501 does not necessarily coincide with the actual ID of the reward object. Note that a specific example of the reward title 1501 will be described below.

The reward image 1503 is an image corresponding to the newly registered reward object (reward image) of the user. As described above, the reward image is retained in the reward image retaining unit 207 of the server 20, and can be provided to the client device 100 according to a request from the reward registration unit 111 which has newly registered a reward object.

The reward description 1505 displays description of a reward object that is newly registered for the user. With regard to the reward description 1505, in the case of a reward object of the illustrated reward title 1501 "behavior recognition has been turned on," for example, text with advice on how to use a result of behavior recognition, presence of a personal information screen, or the like can be displayed as the reward description 1505.

The application activation button 1507 is a button for activating an application relating to a service provided in the present embodiment (application for causing the list display screen 1100 and its subordinate screens described above to be displayed). This application has already been activated and the list display screen 1100 is being displayed in the illustrated example; however, when a reward object is registered through processing of the behavior recognition unit 103 or the reward registration unit 111 executed on the background as described above, the application is newly activated by selecting the application activation button 1507 and a reward history screen to be described below or the like can be referred to. When the OK button 1509 is selected, the reward gain notification screen 1500 is closed with no change.

### (3-4. Reward list screen)

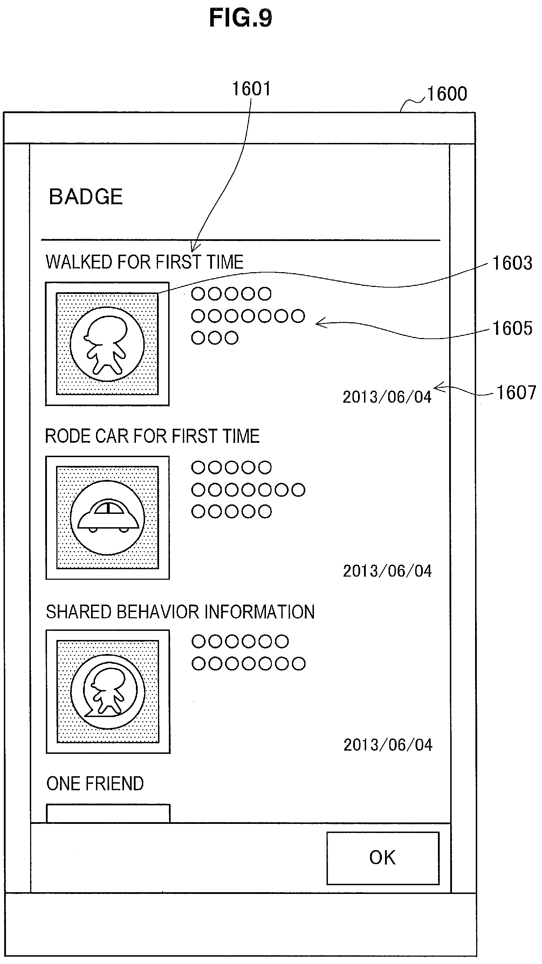

FIG. 9 is a diagram illustrating an example of a reward list screen according to an embodiment of the present disclosure. Referring to FIG. 9, the reward list screen 1600 displayed on the display of the client device 100 includes a reward title 1601, a reward image 1603, a reward description 1605, and a reward gain date 1607.

The reward list screen 1600 can be displayed by, for example, selecting an item such as a "reward list" from the function menu (not illustrated) of an application relating to the service provided in the present embodiment. In the present embodiment, a list of all reward objects registered for the user is displayed on the reward list screen 1600. The reward list screen 1600 can be displayed when, for example, a request for displaying the reward list is transmitted from the display control unit 107 of the client device 100 to the server 20, and according to the request, reward images retained in the reward image retaining unit 207 based on a reward history of the user retained in the reward history retaining unit 209 are selectively provided.

The reward title 1601 displays the title of each reward object. The title displayed as the reward title 1601 can be the same as, for example, the title displayed as the reward title 1501 of the reward gain notification screen 1500.

The reward image 1603 is an image corresponding to each reward object (reward image). The image displayed as the reward image 1603 can be the same as, for example, the image displayed as the reward image 1503 on the reward gain notification screen 1500. However, since the reward image can include an icon indicating "NEW" displayed on a newly gained reward or a number icon indicating the number of gains of a reward that can be gained a plurality of times as will be described below, the reward image displayed on the reward gain notification screen 1500 can be different from the reward image displayed on the reward list screen 1600 with regard to inclusion of such an icon.

The reward description 1605 displays description regarding each reward object. Text displayed as the reward description 1605 can be the same as, for example, text displayed as the reward description 1505 of the reward gain notification screen 1500.

The reward gain date 1607 displays the date on which each object is registered. In the case of a reward object that can be gained a plurality of times, the date on which the last reward object is registered (i.e., the latest gain date) may be displayed as the reward gain date 1607.

### (3-4. Display of a reward on a personal information screen)

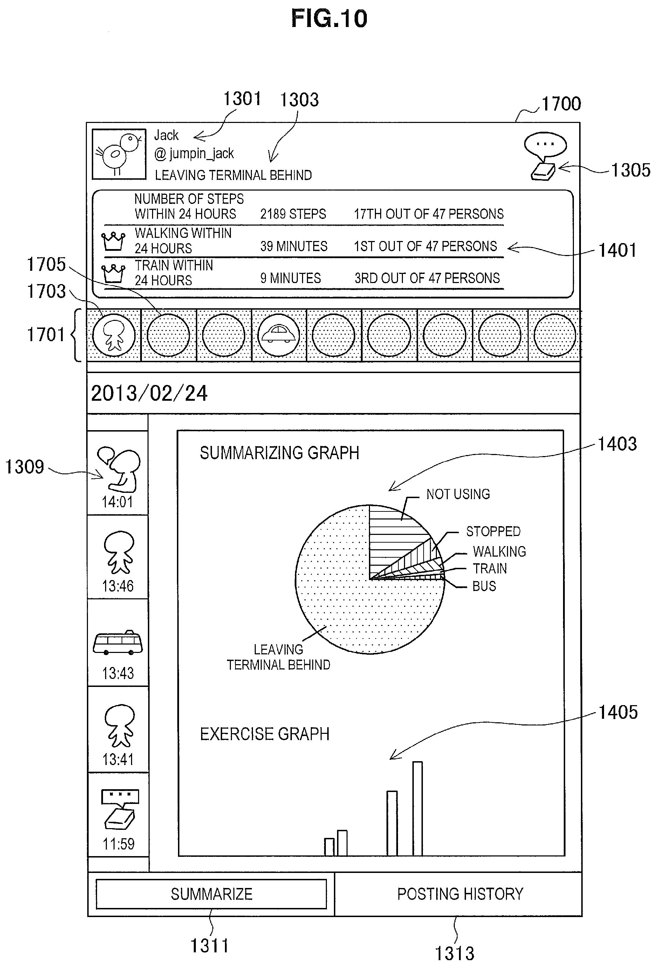

FIG. 10 is a diagram illustrating an example of a case in which the behavior summarizing screen includes display of rewards according to an embodiment of the present disclosure. Referring to FIG. 10, a reward image list 1701 is displayed on the behavior summarizing screen 1700 displayed on the display of the client device 100, in addition to the same display elements as those displayed on the behavior summarizing screen 1400 described with reference to FIG. 7. The reward image list 1701 includes a gained reward image 1703 and a non-gained reward image 1705.

When reward objects are provided in the present embodiment, states of reward objects gained by each user can be viewed on a personal information screen, for example, the behavior summarizing screen 1700. Note that, although not illustrated, a state of a reward object can also be viewed to on the posting history screen 1300.

The reward image list 1701 is displayed between, for example, the ranking 1401 and the summarizing graph 1403. In the reward image list 1701, the gained reward images 1703 and the non-gained reward images 1705 are arrayed in, for example, the horizontal direction of the screen. To be more specific, in the reward image list 1701, reward images prepared in the service are displayed in a predetermined order regardless of whether they were gained by the target user, and reward images gained by the user are displayed as the gained reward images 1703 while reward images not gained by the user are displayed as the non-gained reward images 1705.

Through the display, a user referring to the reward image list 1701 can ascertain how many among all rewards have been gained, in addition to information on what rewards the user has gained. Such display can be useful not only for other users but also for the user whose information is to be displayed to ascertain the degree of his or her attainments with respect to rewards. Note that, in other embodiments, only the gained reward image 1703 may be displayed as the reward image list 1701 and the non-gained reward image 1705 may not be displayed.

The gained reward image 1703 can be the same image as, for example, that displayed as the reward image 1503 of the reward gain notification screen 1500 or the reward image 1603 of the reward list screen 1600. In the present embodiment, however, since the size of the gained reward image 1703 is small, an image more simplified than the aforementioned reward images can be displayed as the gained reward image 1703.

The non-gained reward image 1705 is specifically a different image from, for example, the reward image 1503 of the reward gain notification screen 1500 or the reward image 1603 of the reward list screen 1600. Since a reward object displayed as the non-gained reward image 1705 has not yet been registered for the user, the non-gained reward image 1705 can be displayed for the purpose of merely displaying presence of a reward without elucidating details. Thus, the non-gained reward image 1705 can be an image only expressing, for example, the contour of a reward image as in the illustrated example.

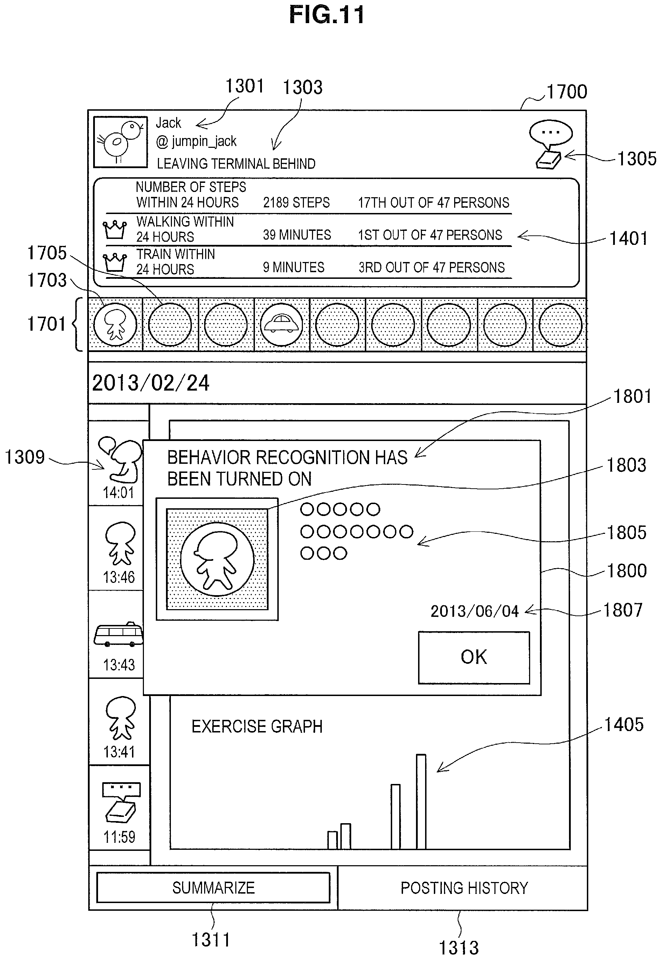

FIG. 11 is a diagram illustrating an example of a gained reward details screen according to an embodiment of the present disclosure. Referring to FIG. 11, the gained reward details screen 1800 displayed on the display of the client device 100 includes a reward title 1801, a reward image 1803, a reward description 1805, and a reward gain date 1807.

The gained reward details screen 1800 is displayed on the display of the client device 100 when, for example, the gained reward image 1703 included in the reward image list 1701 is selected on the behavior summarizing screen 1700. The gained reward details screen 1800 may be displayed as, for example, a popup window as in the illustrated example.

Note that, since the reward title 1801, the reward image 1803, the reward description 1805, and the reward gain date 1807 displayed on the gained reward details screen 1800 can be the same as the reward title 1601, the reward image 1603, the reward description 1605, and the reward gain date 1607 displayed on the reward list screen 1600, detailed description thereof will be omitted.

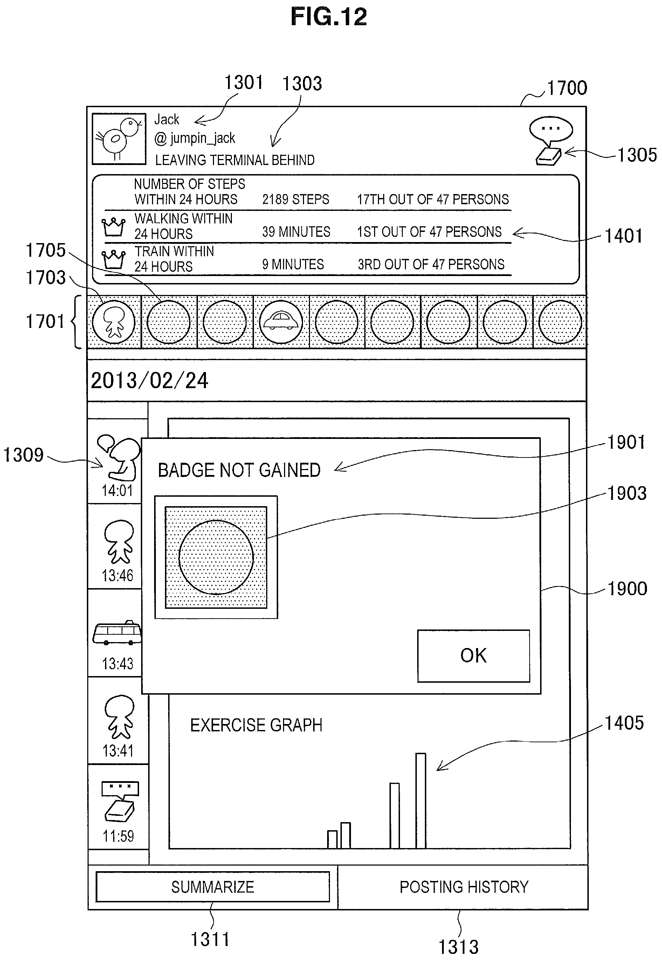

FIG. 12 is a diagram illustrating an example of a non-gained reward details screen according to an embodiment of the present disclosure. Referring to FIG. 12, the non-gained reward details screen 1900 displayed on the display of the client device 100 includes a reward title 1901 and a reward image 1903.

When the non-gained reward image 1705 included in the reward image list 1701 is selected on the behavior summarizing screen 1700, for example, the non-gained reward details screen 1900 is displayed on the display of the client device 100. The non-gained reward details screen 1900 may be displayed as, for example, a popup window as in the illustrated example.

As described above, the non-gained reward image 1705 is displayed for the purpose of only displaying the presence of a reward object without elucidating details thereof. Thus, also on the non-gained reward details screen 1900, text that does not elucidate the content of the reward object such as "Not gained" can be displayed as the reward title 1901, and an image only expressing the contour of a reward image like the non-gained reward image 1705 can be displayed as the reward image 1903.

### (3-5. Reward image)

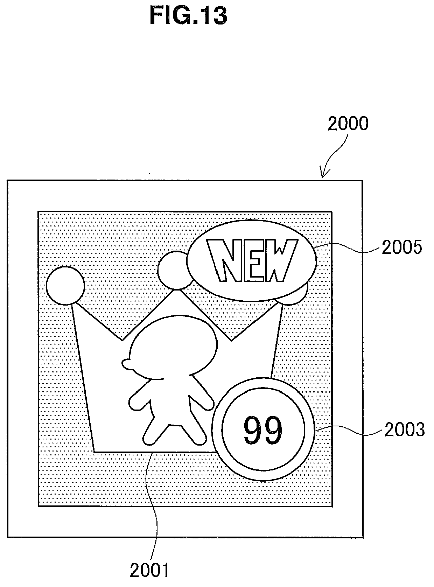

FIG. 13 is a diagram illustrating a specific example of a reward image according to an embodiment of the present disclosure. Referring to FIG. 13, the reward image 2000 includes a pattern 2001, a number icon 2003, and a NEW icon 2005.

The pattern 2001 corresponds to the content of a reward object. In the case of a reward object for "walking for the first time (a behavior "walking" has been recognized for the first time)," for example, the pattern 2001 of the shape of a walking person can be employed. In addition, in the case of a reward object which corresponds to being placed in a ranking, the pattern 2001, in which a human shape taking the pose that relates to the subject of the ranking (for example, the number of steps) is disposed in the base of a crown shape, can be employed as in the illustrated example.

The number icon 2003 displays the number of gains with respect to the reward object which can be gained a plurality of times. In the case of a reward object that is not gained a plurality of times, the number icon 2003 may not be displayed. In addition, in the case of a reward object that can be gained a plurality of times, the number icon 2003 may be displayed when the number of gains reaches two, or the number icon 2003 may be displayed from when the number of gains is one and the possibility of gaining it a plurality of times may be displayed.

The NEW icon 2005 is displayed for a reward object that has been newly registered for the user. The NEW icon 2005 may be displayed only when the reward image 2000 corresponding to the reward object is displayed on, for example, the reward gain notification screen 1500 or the like for the first time, may be displayed until a gained reward object is found on the reward list screen 1600 or the behavior summarizing screen 1700, or may be displayed through a predetermined period after the gain.

### (4. Example of rewards)

Next, a specific example of a reward object according to the embodiments described above will also be described.

### (4-1. Overview)

Table 1 shows an overview of types of reward that can be set in the embodiments. For example, 6 types of reward can be set as follows.

[Table 1]

**Table 1: Overview of types of reward**

| Types | Details |
|---|---|
| First-time behavior | A predetermined type of behavior is detected for the first time. |
| First-time operation | A predetermined type of operation is performed for the first time. |
| Behavior for a predetermined time | A predetermined type of behavior is performed for a predetermined time or longer during a predetermined period (for example, one day). |
| Behavior of another user | A user object that meets a predetermined condition is found in a virtual space display. |
| Increase of sharing users | The number of users with whom behavior information is shared reaches a predetermined number. |
| Ranking | A predetermined ranking is taken. |

The respective types will be described below in more detail.

### (4-2. First-time behavior)

A reward of the type of "first-time behavior" can be registered for the first time when a behavior of a predetermined type is performed, for example, as a result of recognition of the behavior by the behavior recognition unit 103 of the client device 100. Note that, in the example described below, "confirmed" means that a behavior corresponding thereto is confirmed to have been executed as a result of analyzing a plurality of kinds of data such as sensor data or position information, and "detected" means that the behavior is detected to have been executed based on the sensor data. Note that, basically, a reward of the type of "first-time behavior" is registered only one time.

[Table 2]

**Table 2: Examples of rewards for "first-time behavior"**

| Title | Rank | Trigger |
|---|---|---|
| Walked for the first time | 1 | "Walking" has been confirmed in behavior recognition |
| Ran for the first time | 1 | "Running" has been confirmed in behavior recognition |
| Rode a bicycle for the first time | 2 | "Riding bicycle" has been confirmed in behavior recognition |
| Rode in a car for the first time | 2 | "Riding a car" has been confirmed in behavior recognition |
| Rode a bus for the first time | 2 | "Riding a bus" has been confirmed in behavior recognition |
| Rode a train for the first time | 2 | "Riding a train" has been confirmed in behavior recognition |
| Rode an elevator for the first time | 2 | "Riding an elevator" has been confirmed in behavior recognition |
| Jumped for the first time | 2 | "Jumping" has been confirmed in behavior recognition |

### (4-3. First-time operation)

A reward of the type of "first-time operation" can be registered when a setting of a service has been changed through, for example, an operation performed using an operation unit (a touch panel or the like) of the client device 100. Note that, when posting is set as a condition, actual arrival of posting to a server may not be a condition. That is, when an operation of posting has been executed in the client device 100 but the posting has actually failed to reach a server due to a communication condition or the like, a reward can be registered. A more specific example will be shown below. Note that a reward of the type of "first-time operation" is also basically registered only one time.

[Table 3]

**Table 3: Examples of rewards for "first-time operation"**

| Title | Rank | Trigger |
|---|---|---|
| Behavior recognition has been turned on | 1 | Behavior recognition has been turned on |
| Behavior information has been shared | 1 | Sharing behavior information has been set and further behavior information has been open |
| A captured image of a virtual space screen has been posted | 1 | A virtual space screen has been captured and posted |
| The number of steps has been posted | 2 | The number of steps calculated through behavior recognition has been posted |
| A captured image of a behavior summarizing screen has been posted | 2 | The behavior summarizing screen has been captured and posted |

### (4-4. Behavior for a predetermined time)

A reward of the type of "behavior for a predetermined time" can be registered when a behavior of a predetermined type has been continuously performed for a predetermined time or longer, for example, as a result of recognition of the behavior by the behavior recognition unit 103 of the client device 100. Note that the reward of the type of "first-time behavior" can be registered a plurality of times. In this case, when the same reward has already been registered on the same day, registration of more rewards may be suppressed so that, when a user walks 3 hours in 1 day, for example, three rewards are not registered for "walked 1 hour in 1 day." In such a case, if a user walked 3 hours in 1 day, a reward for "walked 1 hour in 1 day" and a reward for "walked 3 hours in 1 day" can each be registered.

[Table 4]

**Table 4: Examples of rewards for "behavior for a predetermined time"**

| Title | Rank | Trigger |
|---|---|---|
| Walked U hours in 1 day | 3 to 4 | Walking for U hours (U = 1, 3, ...) has been confirmed |
| Ran V minutes in 1 day | 3 to 4 | Running for V minutes (V = 30, 90, ...) has been confirmed |
| Rode in a car W hours in 1 day | 3 to 4 | Riding a car for W hours (W = 2, 6, ...) has been confirmed |
| Rode a bicycle X minutes in 1 day | 3 to 4 | Riding a bicycle for X minutes (X = 40, 120, ...) has been confirmed |
| Rode a bus Y hours in 1 day | 3 to 4 | Riding a bus for Y hours (Y = 2, 6, ...) has been confirmed |
| Rode a train Z hours in 1 day | 3 to 4 | Riding a train for Z hours (Z = 2, 6, ...) has been confirmed |

### (4-5. Behavior of another user)

A reward of the type of "behaviors of another user" can be displayed when, for example, behavior of another user indicated by a displayed user object has met a predetermined condition on the virtual space display screen 1200 displayed on the display of the display control unit 107 of the client device 100. In other words, it can be said that, in this case, a reward object is registered based on behavior information of a first user (a user who provides behavior information) for a time for which second user (the user of the client device 100) who is different from the first user observes the user object 1201 of the first user via the virtual space display screen 1200 displayed on the display of the client device 100. A more specific example will be shown below. Note that the reward of the type of "behavior of another user" can be registered a plurality of times.

[Table 5]

**Table 5: Examples of rewards for "behavior of another user"**

| Title | Rank | Trigger |
|---|---|---|
| M persons are riding bicycles | 3 to 5 | M (M = 1, 3, 10, ...) user objects are simultaneously riding bicycles in a virtual space display |
| N persons are riding a car | 3 to 5 | N (N = 1, 3, 10, ...) user objects are simultaneously riding a car in a virtual space display |
| P persons are riding a bus | 3 to 5 | P (P = 1, 3, 10, ...) user objects are simultaneously riding a bus in a virtual space display |
| Q persons are riding a train | 3 to 5 | Q (Q = 1, 3, 10, ...) user objects are simultaneously riding a train in a virtual space display |
| R persons are riding an elevator | 3 to 5 | R (R = 1, 3, 10, ...) user objects are simultaneously riding an elevator in a virtual space display |
| S persons are riding different vehicles | 4, 5 | S (S = 3, 10, ...) user objects are simultaneously riding different vehicles in a virtual space display |
| T persons are jumping | 4, 5 | T (T = 1, 3, 10, ...) user objects are simultaneously jumping in a virtual space display |

Here, when performance of a predetermined behavior by a single user object on the virtual space display screen 1200 is set as a condition in the above-described example, this user object may be limited to the user object of a user who is different from the user of the client device 100 (user who observes the virtual space display screen 1200). In this case, the level of difficulty of a reward increases because a behavior of another user that the user has no control over is necessarily set as a condition. Alternatively, the user object of the user of the client device 100 may be allowed as a user object for the condition. In this case, a reward can be awarded with respect to displaying a behavior of the user of the device on the virtual space display screen 1200 as a user object, and the user can be recommended to perform various behaviors to cause his or her user object to execute a desired behavior (holding a pose, riding a vehicle, making a movement, or the like).

On the other hand, when simultaneous performance of a predetermined behavior by a plurality of user objects on the virtual space display screen 1200 is set as a condition in the above-described example, the user of the client device 100 himself or herself may be included in the plurality of user objects. Furthermore, presence of a user other than the user of the client device 100 in a place apart from the user of the client device 100 may be set as a condition. Here, it can be said that a reward object is registered based on the behavior information of the first user and "the second user who is in the place apart from the first user" for the time for which the second user (the user of the client device 100) who is different from the first user (the user who provides behavior information) observes the user object 1201 of the first user on the virtual space display screen 1200 displayed on the display of the client device 100. In this case, the degree of difficulty of the reward increases because a behavior of another user that the user has no control over is necessarily set as a condition. Alternatively, when a condition that there be a plurality of user objects including that of the user of the client device 100 is set, presence of the users in the same place may be allowed. In this case, pleasure of gaining a reward through cooperation of other users, like when all friends ride an elevator and gain rewards together, is obtained.

Alternatively, when a condition that there be a plurality of user objects is set, each user object may be limited to the user object of a user who is different from the user of the client device 100 (the user who is observing the virtual space display screen 1200), the same as when a condition that there be a single user object is set.

Note that, since a variety of variations are possible for rewards of the type of "behaviors of another user" in addition to the above-described example, a few of them will be described below.

On top of simultaneous performance of a predetermined behavior by a plurality of users (three persons simultaneously riding the same vehicle, or the like), or simultaneous performance of different predetermined types of behavior by a plurality of users (simultaneously riding different vehicles, or the like) as described above, for example, performance of a predetermined behavior by respective users in order may be set as a condition. For example, performance of a predetermined behavior by a plurality of users in order (first a user A and then a user B ride the same vehicle, or the like) or performance of different predetermined types of behavior by a plurality of users in order (first the user A and then the user B ride different vehicles, or the like) may be set as a condition.

In addition, a condition that a plurality of users do not perform a predetermined behavior may be set. For example, a condition that, in a time for which the user of the client device 100 displays the virtual space display screen 1200 (for example, 10 minutes or longer because shorter times are not useful) set as a first time, no user object perform a predetermined behavior (for example, no user object ride a bus or the like) within the first time may be set.

In addition, when simultaneous performance of a predetermined behavior (or different predetermined behaviors) by a plurality of users or performance of a predetermined behavior (or different predetermined behaviors) by a plurality of users in order is set as a condition, information other than behavior information such as position information with regard to some or all of the plurality of users may be used as a condition. For example, a condition that a user A ride a bus, a user C ride a train, and a user B wait in Hokkaido may be set.

As a similar example, such a condition may include environment information, traffic conditions, or the like. For example, when the client device 100 has a humidity sensor, simultaneous (or sequential) walking at a predetermined level of humidity or higher by a plurality of users may be set as a condition. In addition, when environment information such as weather is available, a condition that a plurality of users simultaneously (or sequentially) ride bicycles in the rain may be set. In addition, when the client device 100 can measure a heart rate of the user, a condition that a plurality of users simultaneously (or sequentially) ride bicycles until their heart rates reach a predetermined level or higher may be set. In addition, when traffic information is available and traffic congestion occurs in transportation that the plurality of users share for use, a reward object may be registered for a user who arrives at his or her work place by a predetermined time. In addition, when commute time zones of users can be presumed, a reward object may be registered when a user who normally commutes by car commutes without using a car in the commute time zone.

In addition, a predetermined behavior performed by a plurality of users may not necessarily be a single behavior, and a sequence which includes a plurality of behaviors may be treated as a predetermined behavior. For example, a condition that a plurality of users simultaneously (or sequentially) see the same advertisement and ride a train, or that a plurality of users simultaneously (or sequentially) see the same advertisement and go to the same place (using position information) may be set.

In addition to the above examples, as an example in which a combination of position information and behavior information is set as a condition, a condition that a plurality of users ride different vehicles to go to the same place may be set. In addition, a condition that a plurality of users ride elevators of the same building, rather than the plurality of users merely riding elevators, may be set. In addition, a condition that a number of users each go to the same number of a limited number of specific spots (for example, three users each go to one of three of the most scenic spots in Japan, or the like), and perform the same behavior such as simultaneous (or sequential) sitting, or squatting down may be set. Furthermore, a condition that users in the same building execute a predetermined behavior (for example, standing or the like) in order from lower floors using altitude information acquired through a pneumatic sensor may be set. In addition, when a line of sight of a user can be detected using a wearable terminal or the like, a condition that a plurality of users visually recognize the same thing in different places may be set.

### (4-6. Increase of sharing users)

A reward of the type of "increase of sharing users" can be registered when, for example, the number of users for which a sharing setting for the users of the client devices 100 to share behavior information with one another is generated in the sharing setting retaining unit 201 of the server 20 reaches a predetermined value and the list display screen 1100 including the user is displayed. A more specific example is shown below. Note that the reward of the type of "increase of sharing users" is basically registered only one time.

[Table 6]

**Table 6: Examples of rewards for "increase of sharing users"**

| Title | Rank | Trigger |
|---|---|---|
| 1 sharing user | 1 | 1 sharing setting |
| 10 sharing users | 2 | 10 sharing settings |
| 30 sharing users | 3 | 30 sharing settings |
| 50 sharing users | 4 | 50 sharing settings |
| 100 sharing users | 5 | 100 sharing settings |

### (4-7. Ranking)

A reward of the type of "ranking" can be registered when rankings in which the user of the client device 100 is included at a predetermined position are generated in, for example, the ranking information retaining unit 211 of the server 20. A more specific example is shown below. Note that the reward of the type of "ranking" can be registered a plurality of times.

[Table 7]

**Table 7: Examples of rewards for "rankings"**

| Title | Rank | Trigger |
|---|---|---|
| Included in best 10 on XX | 3 | Rankings are automatically acquired at the time of activation of an application etc. XX includes a number of steps, a time for which a user walks, runs, rides a bicycle, rides a car, rides a bus, rides a train, and rides an elevator, and the like. |
| Ranked 3^{rd} place of XX | 4 | |
| Ranked second on XX | 5 | |
| Ranked first on XX | 6 | |

Although a reward may be a virtual object which can be seen in the form of a reward object on, for example, an application, in other embodiments, items of actual value, for example, points, coupons, admission vouchers to specific places, and the like, may be given to users. In addition, although recommended behaviors are exemplified as the conditions for rewards as described above, conversely, a negative reward under the condition of a behavior that is not recommended may be set. In such a case, points may be deducted, or an admission voucher to a virtual or actual place or a use voucher for a service may be suspended.

### (5. Hardware Configuration)

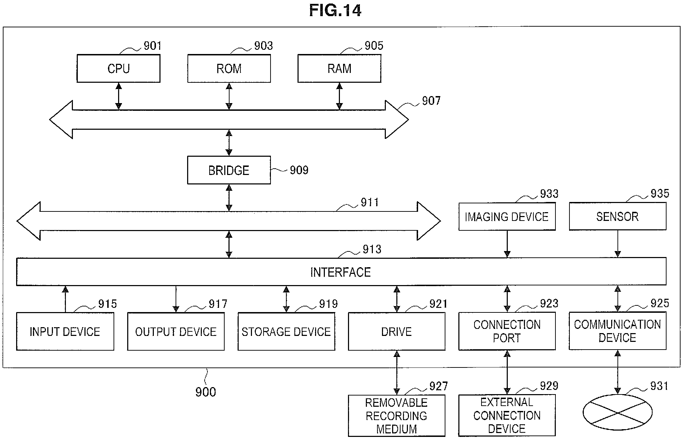

Next, with reference to FIG. 14, a hardware configuration of an information processing device according to an embodiment of the present disclosure will be described. FIG. 14 is a block diagram showing a hardware configuration of an information processing device. An information processing device 900 which is shown may achieve the client device 100 or the server device 200 in the above described embodiments, for example.

The information processing device 900 includes a central processing unit (CPU) 901, read only memory (ROM) 903, and random access memory (RAM) 905. Further, the information processing device 900 may also include a host bus 907, a bridge 909, an external bus 911, an interface 913, an input device 915, an output device 917, a storage device 919, a drive 921, a connection port 923, and a communication device 925. Furthermore, the information processing device 900 may include an imaging device 933 and a sensor 935 as necessary. The information processing device 900 may also include, instead of or along with the CPU 901, a processing circuit such as a digital signal processor (DSP) or an application specific integrated circuit (ASIC).

The CPU 901 functions as an arithmetic processing unit and a control unit and controls an entire operation or a part of the operation of the information processing device 900 according to various programs recorded in the ROM 903, the RAM 905, the storage device 919, or a removable recording medium 927. The ROM 903 stores programs and arithmetic parameters used by the CPU 901. The RAM 905 primarily stores programs used in execution of the CPU 901 and parameters and the like varying as appropriate during the execution. The CPU 901, the ROM 903, and the RAM 905 are connected to each other via the host bus 907 configured from an internal bus such as a CPU bus or the like. In addition, the host bus 907 is connected to the external bus 911 such as a peripheral component interconnect/interface (PCI) bus via the bridge 909.

The input device 915 is a device operated by a user, such as a mouse, a keyboard, a touch panel, buttons, a switch, and a lever. Also, the input device 915 may be a remote control device using, for example, infrared light or other radio waves, or may be an external connection device 929 such as a cell phone compatible with the operation of the information processing device 900. The input device 915 includes an input control circuit that generates an input signal on the basis of information input by the user and outputs the input signal to the CPU 901. The user inputs various kinds of data to the information processing device 900 and instructs the information processing device 900 to perform a processing operation by operating the input device 915.

The output device 917 is configured from a device capable of visually or aurally notifying the user of acquired information. For example, the output device 917 may be: a display device such as a liquid crystal display (LCD), a plasma display panel (PDP), or an organic electro-luminescence (EL) display; an audio output device such as a speaker or headphones; or a printer. The output device 917 outputs results obtained by the processing performed by the information processing device 900 as video in the form of text or an image or as audio in the form of audio or sound.

The storage device 919 is a device for storing data configured as an example of a storage unit of the information processing device 900. The storage device 919 is configured from, for example, a magnetic storage device such as a hard disk drive (HDD), a semiconductor storage device, an optical storage device, or a magneto-optical storage device. This storage device 919 stores programs to be executed by the CPU 901, various data, and various data obtained from the outside.

The drive 921 is a reader/writer for the removable recording medium 927 such as a magnetic disk, an optical disc, a magneto-optical disk, or a semiconductor memory, and is built in or externally attached to the information processing device 900. The drive 921 reads out information recorded on the attached removable recording medium 927, and outputs the information to the RAM 905. Further, the drive 921 writes the record on the attached removable recording medium 927.

The connection port 923 is a port for allowing devices to directly connect to the information processing device 900. Examples of the connection port 923 include a universal serial bus (USB) port, an IEEE1394 port, and a small computer system interface (SCSI) port. Other examples of the connection port 923 may include an RS-232C port, an optical audio terminal, and a high-definition multimedia interface (HDMI) port. The connection of the external connection device 929 to the connection port 923 may enable the various data exchange between the information processing device 900 and the external connection device 929.

The communication device 925 is a communication interface configured from, for example, a communication device for establishing a connection to a communication network 931. The communication device 925 is, for example, a wired or wireless local area network (LAN), Bluetooth (registered trademark), a communication card for wireless USB (WUSB), or the like. Alternatively, the communication device 925 may be a router for optical communication, a router for asymmetric digital subscriber line (ADSL), a modem for various communications, or the like. The communication device 925 can transmit and receive signals and the like using a certain protocol such as TCP/IP on the Internet and with other communication devices, for example. The communication network 931 connected to the communication device 925 is configured from a network which is connected via wire or wirelessly and is, for example, the Internet, a home-use LAN, infrared communication, radio wave communication, and satellite communication.

The imaging device 933 is a device which images a real space by use of various members including an image sensor such as a charge coupled device (CCD) or a complementary metal oxide semiconductor (CMOS) and a lens for controlling image formation of a subject on the image sensor, and generates a pickup image. The imaging device 933 may image a still image or a moving image.

The sensor 935 is any of various sensors such as an acceleration sensor, a gyro sensor, a magnetic field sensor, an optical sensor, and a sound sensor. For example, the sensor 935 acquires information related to the state of the information processing device 900 itself, such as the posture of the housing of the information processing device 900, or information related to the peripheral environment of the information processing device 900, such as the brightness or noise around the information processing device 900. Further, the sensor 935 may include a global positioning system (GPS) sensor which measures the latitude, the longitude, and the altitude of the device by receiving a GPS signal.

Heretofore, an example of the hardware configuration of the information processing device 900 has been shown. Each of the structural elements described above may be configured using a general-purpose material, or may be configured from hardware dedicated to the function of each structural element. The configuration may be changed as appropriate according to the technical level at the time of carrying out.

### (6. Supplement)

The embodiments of the present disclosure may include the information processing device (client device or server device), the system, the information processing method executed in the information processing device or the system, the program for causing the information processing device to function, and the non-transitory tangible media having the program recorded thereon, which have been described above, for example.

The preferred embodiments of the present disclosure have been described above with reference to the accompanying drawings, whilst the present disclosure is not limited to the above examples, of course. A person skilled in the art may find various alterations and modifications within the scope of the appended claims, and it should be understood that they will naturally come under the technical scope of the present disclosure.

Additionally, the present technology may also be configured as below.
(1) An information processing device including:
   a processor,
   wherein the processor realizes
      a behavior information acquisition function of acquiring first behavior information indicating a behavior of a first user,
      a display control function of causing a display unit to display a first user object which is generated based on the first behavior information and indicates the first user, and
      a reward registration function of registering a reward object in association with a second user who is different from the first user based on the first behavior information for a first time for which the second user observes the first user object via the display unit.
(2) The information processing device according to (1), wherein the behavior information acquisition function acquires the first behavior information indicating a behavior of the first user including a plurality of users.
(3) The information processing device according to (2), wherein the reward registration function registers the reward object when the first behavior information indicates that the plurality of users have executed the same predetermined type of behavior within the first time.
(4) The information processing device according to (3), wherein the reward registration function registers the reward object when the first behavior information indicates that the plurality of users have simultaneously executed the same predetermined type of behavior within the first time.
(5) The information processing device according to (3), wherein the reward registration function registers the reward object when the first behavior information indicates that the plurality of users have sequentially executed the same predetermined type of behavior within the first time.
(6) The information processing device according to (2), wherein the reward registration function registers the reward object when the first behavior information indicates that the plurality of users have executed different predetermined types of behavior within the first time.
(7) The information processing device according to (6), wherein the reward registration function registers the reward object when the first behavior information indicates that the plurality of users have simultaneously executed the different predetermined types of behavior within the first time.
(8) The information processing device according to (6), wherein the reward registration function registers the reward object when the first behavior information indicates that the plurality of users have sequentially executed the different predetermined types of behavior within the first time.
(9) The information processing device according to (2), wherein the reward registration function registers the reward object when the first behavior information indicates that the plurality of users have executed a plurality of types of behavior in a predetermined order within the first time.
(10) The information processing device according to (2), wherein the reward registration function registers the reward object when the first behavior information indicates that the plurality of users have not executed a predetermined type of behavior within the first time.
(11) The information processing device according to (1), wherein the reward registration function registers the reward object when the first behavior information indicates that the first user has executed a plurality of types of behavior in a predetermined order within the first time.
(12) The information processing device according to any one of (1) to (10),
   wherein the behavior information acquisition function further acquires second behavior information indicating a behavior of the second user,
   wherein the first user and the second user are in places apart from each other, and
   wherein the reward registration function registers the reward object further based on the second behavior information for the first time.
(13) An information processing method including:
   acquiring, by a processor, first behavior information indicating a behavior of a first user;
   causing, by the processor, a display unit to display a first user object which is generated based on the first behavior information and indicates the first user; and
   registering, by the processor, a reward object in association with a second user who is different from the first user based on the first behavior information for a first time for which the second user observes the first user object via the display unit.
(14) A program for causing a computer to realize:
   a behavior information acquisition function of acquiring first behavior information indicating a behavior of a first user;
   a display control function of causing a display unit to display a first user object which is generated based on the first behavior information and indicates the first user; and
   a reward registration function of registering a reward object in association with a second user who is different from the first user based on the first behavior information for a first time for which the second user observes the first user object via the display unit.

### Reference Signs List

- 10: system
- 20: server
- 100: client device
- 103: behavior recognition unit
- 105: behavior information acquisition unit
- 107: display control unit
- 111: reward registration unit
- 200: server device
- 201: sharing setting retaining unit
- 207: reward image retaining unit
- 209: reward history retaining unit
- 211: ranking information retaining unit

## Claims

1. An information processing device comprising:
a processor,
wherein the processor realizes
a behavior information acquisition function of acquiring first behavior information indicating a behavior of a first user,
a display control function of causing a display unit to display a first user object which is generated based on the first behavior information and indicates the first user, and
a reward registration function of registering a reward object in association with a second user who is different from the first user based on the first behavior information for a first time for which the second user observes the first user object via the display unit.

2. The information processing device according to claim 1, wherein the behavior information acquisition function acquires the first behavior information indicating a behavior of the first user including a plurality of users.

3. The information processing device according to claim 2, wherein the reward registration function registers the reward object when the first behavior information indicates that the plurality of users have executed the same predetermined type of behavior within the first time.

4. The information processing device according to claim 3, wherein the reward registration function registers the reward object when the first behavior information indicates that the plurality of users have simultaneously executed the same predetermined type of behavior within the first time.

5. The information processing device according to claim 3, wherein the reward registration function registers the reward object when the first behavior information indicates that the plurality of users have sequentially executed the same predetermined type of behavior within the first time.

6. The information processing device according to claim 2, wherein the reward registration function registers the reward object when the first behavior information indicates that the plurality of users have executed different predetermined types of behavior within the first time.

7. The information processing device according to claim 6, wherein the reward registration function registers the reward object when the first behavior information indicates that the plurality of users have simultaneously executed the different predetermined types of behavior within the first time.

8. The information processing device according to claim 6, wherein the reward registration function registers the reward object when the first behavior information indicates that the plurality of users have sequentially executed the different predetermined types of behavior within the first time.

9. The information processing device according to claim 2, wherein the reward registration function registers the reward object when the first behavior information indicates that the plurality of users have executed a plurality of types of behavior in a predetermined order within the first time.

10. The information processing device according to claim 2, wherein the reward registration function registers the reward object when the first behavior information indicates that the plurality of users have not executed a predetermined type of behavior within the first time.

11. The information processing device according to claim 1, wherein the reward registration function registers the reward object when the first behavior information indicates that the first user has executed a plurality of types of behavior in a predetermined order within the first time.

12. The information processing device according to claim 1, wherein the behavior information acquisition function further acquires second behavior information indicating a behavior of the second user, wherein the first user and the second user are in places apart from each other, and wherein the reward registration function registers the reward object further based on the second behavior information for the first time.

13. An information processing method comprising:
acquiring, by a processor, first behavior information indicating a behavior of a first user;
causing, by the processor, a display unit to display a first user object which is generated based on the first behavior information and indicates the first user; and
registering, by the processor, a reward object in association with a second user who is different from the first user based on the first behavior information for a first time for which the second user observes the first user object via the display unit.

14. A program for causing a computer to realize:
a behavior information acquisition function of acquiring first behavior information indicating a behavior of a first user;
a display control function of causing a display unit to display a first user object which is generated based on the first behavior information and indicates the first user; and
a reward registration function of registering a reward object in association with a second user who is different from the first user based on the first behavior information for a first time for which the second user observes the first user object via the display unit.
